# FASCICULE DE BREVET EUROPEEN

(11) **EP 3 825 180 B1**
(45) Date de publication et mention de la délivrance du brevet: **09.08.2023**
(21) Numéro de dépôt: 20207913.3
(22) Date de dépôt: 16.11.2020
(51) Int. Cl.: B60P 3/20

(54) **DISPOSITIF DE PARTITIONNEMENT POUR VÉHICULE FRIGORIFIQUE**
TRENNWANDVORRICHTUNG FÜR KÜHLFAHRZEUG
PARTITIONING DEVICE FOR A REFRIGERATED VEHICLE

(30) Priorité: 19.11.2019 FR 1912916
(43) Date de publication de la demande: 26.05.2021
(73) Titulaire: Lamberet, 01380 Saint-Cyr-sur-Menthon (FR)
(72) Inventeur: DUGAS, Frédéric, 01250 MONTAGNAT (FR); TUET, Gwénaël, 01000 BOURG EN BRESSE (FR)
(74) Mandataire: Germain Maureau

(56) Documents cités:
- DE-U1- 9 013 442
- FR-A1- 3 035 835
- FR-A3- 2 635 737

## Description

La présente invention concerne un dispositif de partitionnement 1 pour véhicule frigorifique et plus particulièrement pour un camion frigorifique.

Un dispositif de partitionnement pour véhicule frigorifique permet de délimiter dans une même carrosserie frigorifique que ce soit une caisse posée sur un camion porteur ou sur une semi-remorque des zones maintenues sous des températures différentes.

Pour cela, un dispositif de partitionnement dispose d'une cloison mobile entre une position verticale dans la carrosserie et une position d'attente dans laquelle la cloison est horizontale. De tels dispositifs de partitionnement sont par ex. connus de DE 90 13 442 U1, FR 2 635 737 A3 et FR 3 035 835 A1.

Les dispositifs de partitionnement actuellement connus présentent cependant de nombreux inconvénients.

Les dispositifs de l'art antérieur sont peu robustes et se dégradent dans le temps.

Ils sont de plus peu ergonomiques car ils réclament une force considérable de la part de l'opérateur qui les manipule.

En outre, ils occupent un espace important en sous face du plafond de la carrosserie au détriment de la charge utile du véhicule.

La présente invention vise à remédier à au moins un des inconvénients précités en fournissant un dispositif de partitionnement pour carrosserie frigorifique comprenant un mécanisme d'indexation configuré pour se déplacer sur au moins un rail fixé sur un plafond de la carrosserie, sur lequel est relié au moins une cloison isotherme, le mécanisme d'indexation permettant de verrouiller la cloison en position verticale de partitionnement et en position horizontale d'attente contre le plafond et de déverrouiller la cloison pour la positionner sur le ou les rails, l'au moins une cloison comprenant un panneau sandwich comprenant une âme en mousse alvéolaire, une couche intermédiaire de mousse EPDM disposée de part de et d'autre de l'âme en matériau EPDM et une couche externe de polycarbonate disposée sur chaque couche intermédiaire, le mécanisme d'indexation comprenant au moins un chariot sur lequel est monté en pivot une fourche, une cloison étant fixée sur la fourche, le chariot est équipé d'un boitier d'indexation comprenant un doigt d'indexation commandé entre position rétractée et une position sortie par une came mobile, la came comprend un première rampe et une seconde rampe, les première et seconde rampes présentant des pentes inversées.

Selon plusieurs caractéristiques prises isolément ou en combinaison :
- la came est montée sur une glissière et la came est dotée d'une platine sur laquelle est fixé un câble qui relie la fourche au chariot.
- l'une des extrémités du câble est fixée sur la fourche et l'autre extrémité est fixée sur une tige filetée qui est engagée dans un ressort.

L'invention concerne également un véhicule frigorifique comprenant un dispositif de partitionnement tel que défini précédemment.

L'invention sera décrite plus en détails à travers les différentes figures présentées ci-dessous, ce qui facilitera sa compréhension.
[Fig.1] représente une vue en perspective une forme de réalisation d'un dispositif de partitionnement,
[Fig.2] représente une vue en perspective d'une cloison du dispositif de partitionnement de la figure 1,
[Fig.3] représente une vue en coupe d'une cloison,
[Fig.4] représente à une échelle agrandie un détail de la cloison
[Fig.5] représente une vue partielle de dessous d'une forme de réalisation d'un mécanisme d'indexation
[Fig.6] représente une vue de dessus du mécanisme d'indexation d'une cloison conformément à l'invention.
[Fig.7] représente une vue partielle du mécanisme d'indexation en vue de dessous.
[Fig.8] représente un boitier d'indexation.

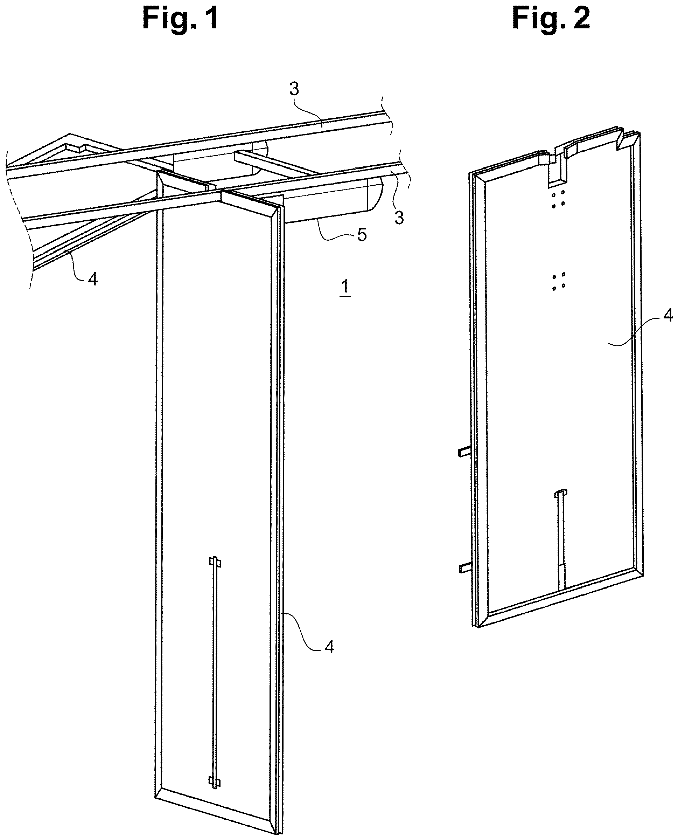

La figure 1 montre un dispositif de partitionnement 1 d'une carrosserie frigorifique. La carrosserie frigorifique n'est pas représentée sur les figures mais comprend, de façon tout à fait conventionnelle, un plancher, des parois latérales et un plafond qui sont conçus en matériaux isothermes de manière à définir une enceinte isolée dans laquelle peuvent être transportées des marchandises sous des températures contrôlées.

Le dispositif de partitionnement 1, comme on va le voir, permet de définir des zones à l'intérieur d'une carrosserie isotherme qui peuvent être maintenues à des températures différentes.

Pour cela, le dispositif de partitionnement 1 selon l'invention, comme on peut le voir sur la figure 1, comprend deux rails 3 qui sont destinés à être fixés au plafond de la carrosserie isotherme.

Sur ces rails 3 glisse un mécanisme d'indexation 5 sur lequel sont embarquées deux cloisons 4 isothermes mobiles.

Dans l'exemple montré sur la figure 1, le dispositif de partitionnement 1 comprend deux cloisons 4 indépendantes.

Dans d'autres formes de réalisations représentées sur les figures, le dispositif de partitionnement 1 peut comprendre une unique cloison.

La figure 2 montre, en coupe, la structure de la cloison 4. Il s'agit d'une structure multicouche qui, comme on va le voir, est à la fois légère et souple.

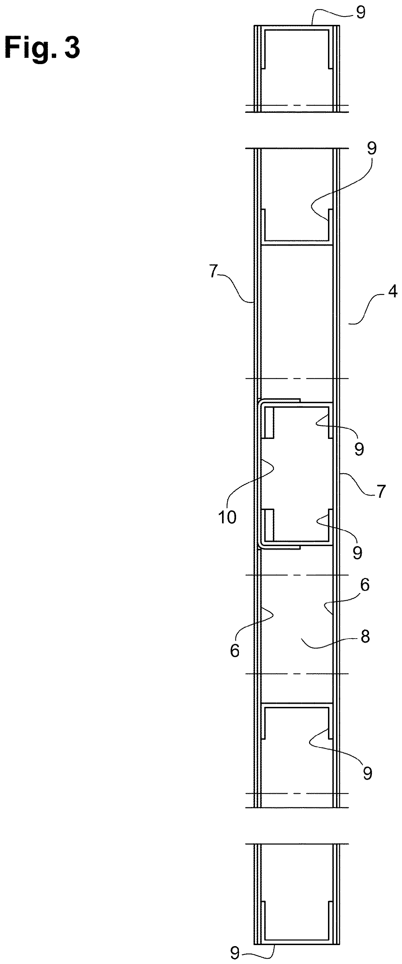

Cette structure, comme le montre la figure 3, présente une âme 8 centrale formée par une mousse de faible densité de polystyrène extrudé. Il peut s'agir, par exemple, d'une mousse Styrofoam ^{®} dont l'épaisseur peut être de 40 à 50 mm.

De part et d'autre de l'âme 8, la cloison 4 comprend une couche intermédiaire 6 de mousse EPDM d'épaisseur 2 à 4 mm et de préférence 4 mm qui est fixée sur l'âme 8 par un adhésif.

Les faces extérieures de la cloison 4 sont, pour leur part, formées par une couche externe 7 de polycarbonate qui peut présenter une épaisseur de 2 mm. La couche externe 7 de polycarbonate est collée sur la couche intermédiaire 6 de mousse d'EPM.

On peut trouver dans la cloison 4 des profilés de renfort 9 en U qui sont situés au niveau des champs et également à l'intérieur de l'âme 8. Ces profilés sont, par exemple réalisés en matière pultrudée.

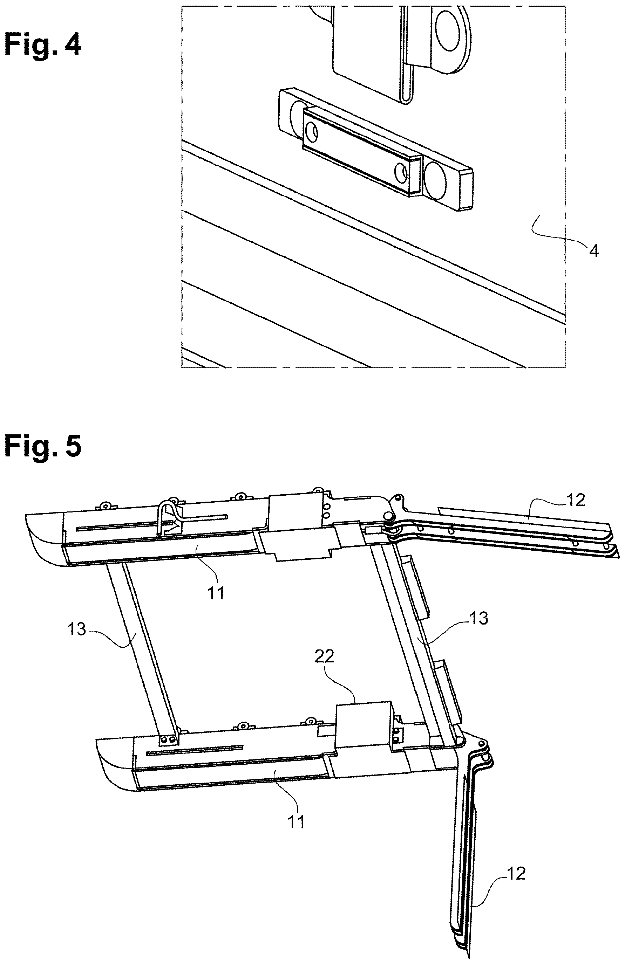

Comme le montre la figure 4, il est également prévu un profilé 10 en acier qui s'étend au moins partiellement sur la hauteur de la cloison 4.

On obtient ainsi une cloison 4 d'une grande légèreté et une importante flexibilité. Cette cloison 4 est par ailleurs d'une grande résistance aux chocs.

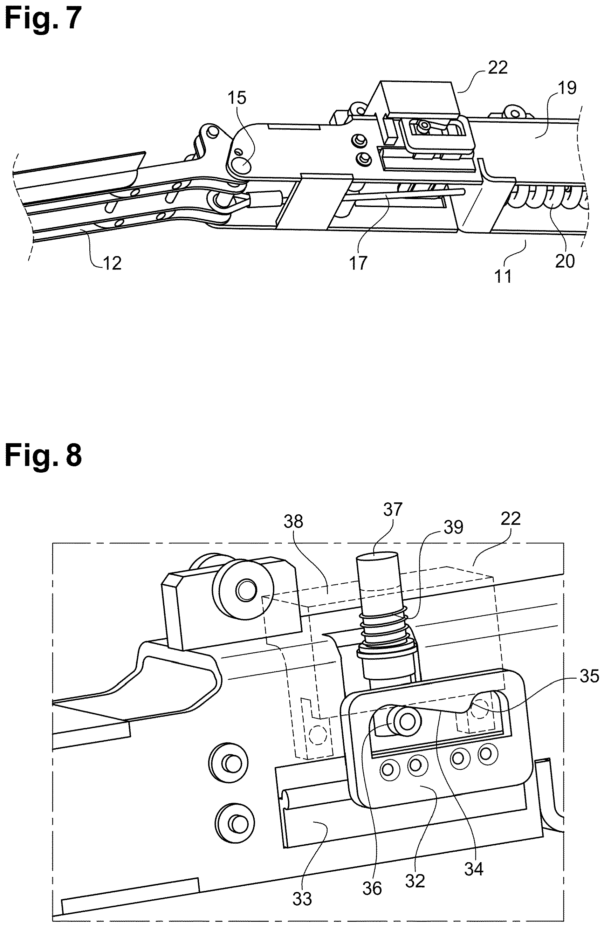

La cloison 4, ainsi formée, est reliée aux rails 3 par un mécanisme d'indexation 5 qui est plus particulièrement représenté aux figures 5 à 8.

La figure 5 montre le mécanisme d'indexation 5 en vue de dessous. Comme cela apparait sur cette figure, le mécanisme d'indexation 5 comprend deux chariots 11 qui sont configurés pour venir coulisser et se bloquer sur les rails 3 et deux fourches 12 sur lesquelles les cloisons 4 sont fixées.

Pour une meilleure compréhension, les cloisons 4 ont été omises sur les figures 5 à 8.

Les fourches 12 sont formée des profilés métalliques qui vont permettre un interfaçage avec les cloisons 4. Les fourches 12 sont montées en pivot par l'intermédiaire d'un axe 15 sur chacun des chariots 11.

En plus de la liaison pivot qui relie la fourche 12 à son chariot 11 respectif, la fourche 12 est reliée par un câble 17 à un ressort 20 de compression.

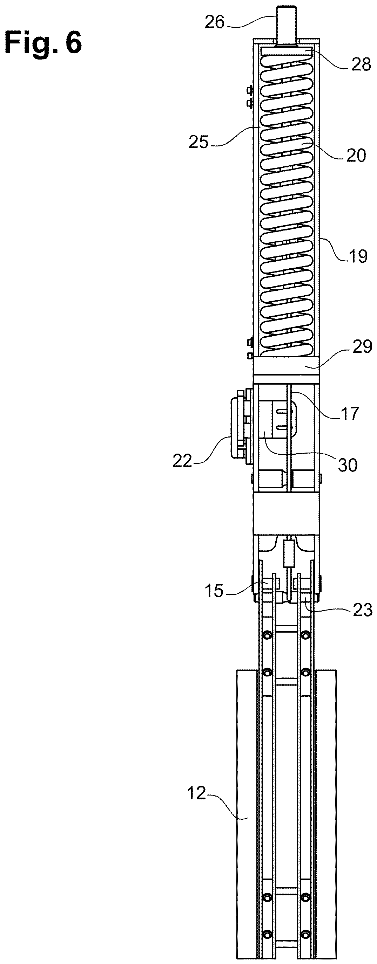

On peut se reporter à la figure 6 qui montre en vue de dessus l'articulation entre la fourche 12 et le chariot 11. Le chariot 11 présente un corps 19 formé par un profilé métallique en U à l'intérieur duquel est disposé le ressort 20 de compression et un boitier d'indexation 22.

Le câble 17 dont l'une des extrémités est rendue solidaire de la fourche 12, est, à son autre extrémité, assujetti à une tige filetée 25 qui est engagée dans le ressort 20 de compression. La tige filetée 25 est elle-même dotée d'un écrou 26 qui agit sur une cale de compression 28. Ainsi, le ressort 20 est disposé entre une butée 29 présente dans le chariot 11 et une cale de compression 28 qui est réglable en fonction de la position de l'écrou 26.

On note également que le câble 17 est relié au boitier d'indexation 22 par une platine de liaison 30. La liaison entre le câble 17 et la platine de liaison 30 se fait par un système de vis écrou ou de cavalier qui n'est pas représentée.

La platine de fixation 30 est elle-même solidaire d'une came 32 qui est montée mobile en translation sur une glissière 33. Cette came présente deux rampes 34,35 qui, comme on peut le voir sur la figure, ont des pentes inversées et sont asymétriques comme cela est montré sur la figure 9.

Sur les deux rampes 34,35 de la came 32, roule un galet 36 qui est relié à un doigt d'indexation 37. Le doigt d'indexation 37 est guidé par un carter 38 et est sollicité en position déployée par un ressort 39.

Comme on va le voir le mécanisme d'indexation permet de maintenir dans une position verrouillée stable (c'est-à-dire une position dans laquelle le doigt d'indexation 37 est engagé dans une ouverture du rail 3) la cloison 4 lorsque celle-ci est en position verticale ou est en position horizontale et permet de placer dans une position déverrouillée (c'est-à-dire une position dans laquelle le doigt d'indexation 37 est rétracté et n'est pas engagé dans une ouverture de rail 3) la cloison 4 lorsque celui-ci est dans une position dans laquelle elle forme un angle avec la verticale.

Lorsque la cloison 4 est dans une position horizontale, le doigt d'indexation 37 est engagé dans un perçage réalisé dans le rail 3 qui fait que la cloison 4 est bloquée par rapport aux rails 3.

Lorsqu'un opérateur souhaite modifier la position de la cloison 4 par rapport aux rails 3 ou souhaite abaisser la cloison 4 pour cloisonner la carrosserie, il exerce manuellement une traction sur la cloison 4. Cette traction entraine donc une rotation de la cloison 4 et un déplacement du câble 17 qui est sollicité en permanence par le ressort 20.

Le déplacement du câble 17 provoque un mouvement de la came 32 sur la glissière 33 qui a pour effet que le doigt d'indexation 37 va être entraîné dans une position rétractée ; en effet, le galet 36 va glisser contre une rampe 32 entrainant la rétraction du doigt d'indexation 37 à l'intérieur de son carter 38.

Dans cette configuration, la cloison 4 est libre de glisser sur les rails 3 et l'opérateur peut soit le positionner axialement à un autre point des rails 3 soit en poursuivant la rotation placer la cloison 4 dans une position verticale de cloisonnement de la carrosserie.

Dans ce dernier cas de figure, la rotation de la cloison 4 va se poursuivre et le câble 17 va continuer son déplacement entrainant en cela la came 32 jusqu'à une position dans laquelle le galet 36 va se trouver en regard de la rampe 35.

Dans cette position, le doigt d'indexation 37 sort du boitier 38 et se trouver dans sa position de verrouillage et de ce fait, la cloison 4 est en position escamotée bloquée axialement.

Le fait que les rampes 34 et 35 de la came soit asymétriques se traduit en pratique par un déverrouillage depuis la position de cloisonnement sur une course angulaire plus courte qu'un déverrouillage depuis d'attente de la cloison.

Il est possible de prévoir sur la cloison 4 la présence d'aimants 39 qui vont assurer le blocage de celle-ci dans sa position d'attente. Cela permet de minimiser la sollicitation du ressort lorsque la cloison 4 est en position d'attente.

On note que, grâce à la présente de cette came, le chariot 11 présente une cote verticale extrêmement compacte ce qui, combinée à la compacité de la cloison, permet d'obtenir un dispositif de partitionnement 1 qui est extrêmement favorable en terme de cote verticale, Cela favorise la capacité de chargement de la carrosserie.

## Revendications

1. Dispositif de partitionnement (1) pour carrosserie frigorifique comprenant un mécanisme d'indexation (5) configuré pour se déplacer sur au moins un rail (3) fixé sur un plafond de la carrosserie, sur lequel est relié au moins une cloison (4) isotherme, le mécanisme d'indexation (5) permettant de verrouiller la cloison (4) en position verticale de partitionnement et de verrouiller la cloison (4) en position horizontale d'attente contre le plafond et de déverrouiller la cloison pour la positionner sur le ou les rails (3), l'au moins une cloison (4) comprenant une âme (8) en mousse alvéolaire, une couche intermédiaire (6) de mousse EPDM disposée de part de et d'autre de l'âme (8) et une couche externe (7) de polycarbonate disposée sur chaque couche intermédiaire (8), le mécanisme d'indexation (5) comprenant au moins un chariot (11) sur lequel est monté en pivot une fourche (12), une cloison (4) étant fixée sur la fourche (12), le chariot (11) est équipé d'un boitier d'indexation (22) comprenant un doigt d'indexation (37) commandé entre position rétractée et une position sortie par une came (32) mobile, la came (32) comprend une première rampe (34) et une seconde rampe (35), les première et seconde rampes (34,35) présentant des pentes inversées.

2. Dispositif de partitionnement (1) selon la revendication 1, **caractérisé en ce que** la came (32) est montée sur une glissière (33) et ce que la came (32) est dotée d'une platine (30) sur laquelle est fixé un câble (17) qui relie la fourche (12) au chariot (11).

3. Dispositif de partitionnement (1) selon la revendication 2, **caractérisé en ce que** l'une des extrémités du câble (17) est fixée sur la fourche (12) et l'autre extrémité est fixée sur une tige filetée (25) qui est engagée dans un ressort (20).

4. Véhicule frigorifique comprenant un dispositif de partitionnement (1) selon l'une quelconque des revendications précédentes.

5. Ensemble comprenant un véhicule frigorifique muni d'un dispositif de partitionnement 1 selon l'une quelconque des revendications 1 à 3.

## Patentansprüche

1. Trennvorrichtung (1) für einen kühlenden Fahrzeugkörper, umfassend einen Schaltmechanismus (5), der dazu eingerichtet ist, sich auf mindestens einer Schiene (3) zu bewegen, die an einer Decke des Fahrzeugkörpers befestigt ist, an dem mindestens eine isotherme Trennwand (4) befestigt ist, wobei der Schaltmechanismus (5) ermöglicht, die Trennwand (4) in der vertikalen Trennposition zu arretieren und die Trennwand (4) in der horizontalen Warteposition an der Decke zu arretieren und die Trennwand zu lösen, um sie auf der oder den Schienen (3) zu positionieren, wobei die mindestens eine Trennwand (4) einen Kern (8) aus Zellschaum, eine Zwischenschicht (6) aus EPDM-Schaum, die auf beiden Seiten des Kerns (8) angeordnet ist, und eine äußere Schicht (7) aus Polycarbonat, die auf jeder Zwischenschicht (8) angeordnet ist, umfasst, wobei der Schaltmechanismus (5) mindestens einen Schlitten (11) umfasst, an dem eine Gabel (12) schwenkbar angebracht ist, wobei an der Gabel (12) eine Trennwand (4) befestigt ist, wobei der Schlitten (11) mit einem Schaltgehäuse (22) ausgestattet ist, der einen Schaltfinger (37) umfasst, der zwischen einer eingefahrenen Position und einer ausgefahrenen Position durch einen beweglichen Nocken (32) gesteuert wird, wobei der Nocken (32) eine erste Rampe (34) und eine zweite Rampe (35) umfasst, wobei die erste und die zweite Rampe (34, 35) umgekehrte Steigungen aufweisen.

2. Trennvorrichtung (1) nach Anspruch 1, **dadurch gekennzeichnet, dass** der Nocken (32) auf einer Führungsschiene (33) montiert ist und dass der Nocken (32) mit einer Platte (30) versehen ist, an der ein Kabel befestigt ist (17), das die Gabel (12) mit dem Schlitten (11) verbindet.

3. Trennvorrichtung (1) nach Anspruch 2, **dadurch gekennzeichnet, dass** eines der Enden des Kabels (17) an der Gabel (12) befestigt ist und das andere Ende an einer Gewindestange (25) befestigt ist, die in eine Feder (20) eingreift.

4. Kühlfahrzeug, umfassend eine Trennvorrichtung (1) nach einem der vorhergehenden Ansprüche.

5. Anordnung, umfassend ein Kühlfahrzeug, das mit einer Trennvorrichtung 1 nach einem der Ansprüche 1 bis 3 ausgestattet ist.

## Claims

1. A partitioning device (1) for a refrigerated body comprising an indexing mechanism (5) configured to move over at least one rail (3) fastened on a ceiling of the body, on which at least one isothermal partition (4) is connected, the indexing mechanism (5) allowing locking the partition (4) in the partitioning vertical position and locking the partition (4) in the standby horizontal position against the ceiling and unlocking the partition to position it on the rail(s) (3), the at least one partition (4) comprising a core (8) made of cellular foam, an intermediate layer (6) of EPDM foam disposed on either side of the core (8) and an outer layer (7) of polycarbonate disposed on each intermediate layer (8), the indexing mechanism (5) comprising at least one carriage (11) on which a fork (12) is pivotally mounted, a partition (4) being fastened on the fork (12), the carriage (11) is equipped with an indexing case (22) comprising an indexing finger (37) controlled between a retracted position and an extended position by a movable cam (32), the cam (32) comprises a first ramp (34) and a second ramp (35), the first and second ramps (34, 35) having inverted slopes.

2. The partitioning device (1) according to claim 1, **characterized in that** the cam (32) is mounted on a slide (33) and that the cam (32) is provided with a plate (30) on which a cable (17) is fastened which connects the fork (12) to the carriage (11).

3. The partitioning device (1) according to claim 2, **characterized in that** one of the ends of the cable (17) is fastened on the fork (12) and the other end is fastened on a threaded rod (25) which is fitted into a spring (20).

4. A refrigerated vehicle comprising a partitioning device 1 according to any one of the preceding claims.

5. An assembly comprising a refrigerated vehicle provided with a partitioning device 1 according to any one of claims 1 to 3.
